# EUROPEAN PATENT APPLICATION

(11) **EP 2 206 895 A2**
(43) Date of publication of application: **14.07.2010**
(21) Application number: 09180592.9
(22) Date of filing: 23.12.2009
(51) Int. Cl.: F01K 23/18, F01K 13/02, F01N 3/20

(54) **Ammonia injection system for peaker cycle**

(30) Priority: 09.01.2009 US 351204
(71) Applicant: General Electric Company, Schenectady, NY 12345 (US)
(72) Inventor: Nattanmai, Saravanan Venkataraman, 60023 Chennai (IN); Pendyala, Rajashekhar, 560066 Bangalore (IN); Sengar, Ajit Singh, 560078 Bangalore (IN)
(74) Representative: Gray, Thomas

(57) **Abstract**

An ammonia injection system including an aqueous ammonia store (152) adapted to store aqueous ammonia. The system also includes an ammonia pump (154) having in input coupled to the aqueous ammonia store and a pump output. The system also includes and an ammonia vaporizer (158) coupled to the pump output and having a vaporizer input configured for connection an output of a low pressure super-heater, the vaporizer including a grid output adapted for connection to an ammonia injection grid.

## Description

The subject matter disclosed herein relates to producing electrical power and, in particular, to treating exhaust gas produced by a peaker cycle.

Baseload (also base load, or baseload demand) is the minimum amount of power that a utility or distribution company must make available to its customers, or the amount of power required to meet minimum demands based on reasonable expectations of customer requirements. Baseload values typically vary from hour to hour in most commercial and industrial areas. The baseload is generated by a so-called "baseload power plant."

Peaks or spikes in customer power demand are handled by smaller and more responsive types of power plants called peaking power plants. Of course, a baseload power plant may be co-located with a peaking power plant.

For greater efficiency, a Heat Recovery Steam Generator (HRSG) is added at the exhaust of some plants. This is known as a combined cycle plant. Cogeneration uses waste exhaust heat for process or other heating uses. Both of these options are used only in plants that are intended to be operated for longer periods than usual.

Peak load requirements in the past have been met using different techniques depending on the duration and the maximum power requirements. One solution involves utilizing a simple cycle gas turbine. For applications requiring high peak loads over significantly long period of time, supplementary simple cycle based gas turbines are used. Start-up time for such turbines must be short, ranging from 7 - 10 minutes, and it is an important design requirement. Such systems may operate with operating efficiency of about 37% and power output of 175 MW, for example. Such systems, however, may have low peak load efficiency due to un-recovered heat in their exhaust. In addition, these systems may require expensive and less reliable high temperature selective catalytic reduction (SCR) catalysts to reduce peaker cycle NOₓ production. Further, exhaust fans for high temperature SCR are very expensive and themselves impose a high auxilary demand power penalty. In cases where an ammonia injection system is used in a peaker system, the external skids for the ammunia injection system is very high.

According to one aspect of the invention, an electrical power generation system including a combined cycle and a peaker cycle are provided. The combined cycle includes a low pressure super-heater having a steam outlet. The peaker cycle includes an output duct that includes an ammonia injection grid and an ammonia injection system that includes an ammonia vaporizer coupled to the steam outlet and the ammonia injection grid.

According to another aspect of the invention, an ammonia injection system is provided. The system includes an aqueous ammonia store adapted to store aqueous ammonia and an ammonia pump having in input coupled to the aqueous ammonia store and a pump output. The sytem also includes an ammonia vaporizer coupled to the pump output and having a vaporizer input configured for connection an output of low pressure super-heater, the vaporizer including a grid output adapted for connection to an ammonia injection grid.

According to yet another aspect of the invention, an electrical power generation system is provided. The system includes a combined cycle and a peaker cycle. the combined cycle includes a gas turbine and a heat recovery steam generator coupled to the gas turbine and includes a low pressure super-heater having a low pressure super-heater output. The peaker cycle includes a peaker gas turbine and an output duct coupled to the peaker gas turbine. The output duct includes an ammonia injection grid. The peaker cycle includes a supplemental low pressure super-heater within the output duct and thermally coupled to the low pressure super-heater output. The peaker cycle also includes an ammonia injection system that includes an ammonia vaporizer coupled to the low pressure super-heater output and the ammonia injection grid.

These and other advantages and features will become more apparent from the following description taken in conjunction with the drawings.

The subject matter which is regarded as the invention is particularly pointed out and distinctly claimed in the claims at the conclusion of the specification. Various features and advantages of the invention are apparent from the following detailed description taken in conjunction with the accompanying drawing in which:

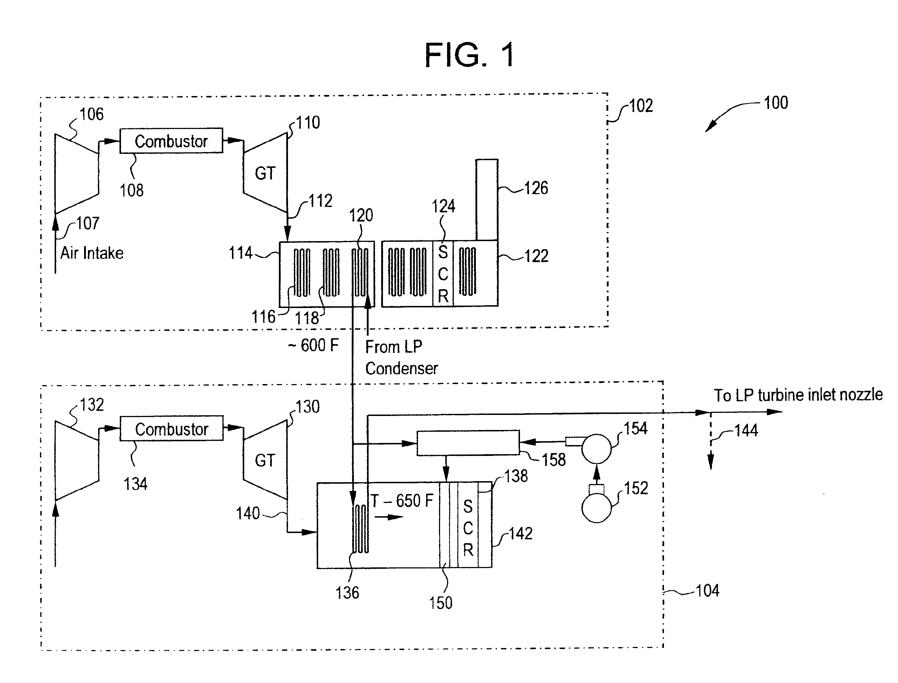

FIG. 1 is system diagram of an electrical power generation system according to an embodiment of the present invention.

The detailed description explains embodiments of the invention, together with advantages and features, by way of example with reference to the drawings.

FIG. 1 shows an example of an electrical power generation system 100 according to one embodiment of the present invention. The system 100 includes combined cycle 102 and a peaker cycle 104.

The combined cycle 102 may include a compressor 106 that includes an air intake 107. The compressor 106 is coupled to a combustor 108 that combusts a gas or fuel oil in a stream of compressed air. The compressor 108 is coupled to a gas turbine 110. The gas turbine 110 extracts energy from a flow of hot gas produced by combustion of gas or fuel. In one embodiment, the extracted engery is converted to electricity.

The output 112 of the gas turbine 110 is an exhaust gas that may be used in other cycles of the combined system 100. The exhaust gas may be used, for example, to heat steam for use in a steam turbine (not shown). The combined cycle, thus, includes an HSRG 114. The HSRG 114 may include a high pressure super-heater 116, an intermediate pressure super-heater 118 and a low pressure super-heater 120. The HSRG 114 may include only the low pressure super-heater 120 or any combination of the low pressure super-heater 120 and another super-heater.

The exhaust gas may be at a temperature of appoximately 1132 °F. Ultimately, the exhaust gas is processed in an exhaust duct 120 which includes a low temperature SCR 124 to treat the exhaust gas before it is released through the stack 126.

As described above, the system 100 also includes a peaker cycle 104. In the prior art, such systems, however, had low peak load efficiency. One cause for this low efficiency may be due to un-recovered heat from exhaust gas in the peaker cycle. In addition, these systems required the utilization of less reliable and expensive high temperature SCR catalysts and an additional external high cost cooling fan to cool the exhaust gas to high temperature SCR levels. Further, such systems typically required an external skid for an ammonia injection system to effectively operate a high temperature SCR.

The peaker cycle 104 includes a peaker gas turbine 130. The peaker gas turbine 130 is coupled to a peaker compressor 132 by a peaker combustor 134. The output temperature of the peaker exhaust gas 140 is about 1150 °F and is passed through a peaker exhaust duct 142. The peaker exhaust duct 142 includes a low pressure supplementary super-heater 136 and a peaker low-temperature SCR 138. Of course, the peaker HSRG 142 may be coupled to the stack 126.

An output of the low pressure super-heater 114 is coupled to an input of the supplementary low presssure super-heater 136. An input of the low pressure super-heater may be coupled to a low pressure condensor (not shown).

The temperature of the output product (typically steam) of the low pressure super-heater 114 is typically about 600 °F. As the exhaust gas from the peaker gas turbine 130 passes through the peaker exhaust duct 142 it heats the output product to about 1050 °F while the gas itself cools to about 650 °F. The cooling of the peaker gas turbine's 130 exhaust gas to this temperature allows for normal, rather than high temperature, SCR to be performed thereon. That is, normal, rather than high temperature SCR catalysts may be used. In addition, because output product has been heated in the supplementary low pressure super-heater 136, the waste heat from the peaker cycle 104 has been recovered and, thus, efficiency of the combined cycle improved.

The output of the supplemental low pressure super-heater 136 is provided to a low pressure turbine inlet nozzle. In one optional embodiment, and as indicated by the dashed arrow labeled 144, the output of the supplemental low pressure super-heater 136 may be diverted to different stages of the low pressure turbine as taught, for example, in U.S. Patent No. 6,442,924.

The output duct 142 also includes an ammonia injection grid 150. The ammonia injection grid 150 causes the exhaust gas produced by the peaker gas turbine 130 to mix with ammonia. The ammonia supplied to ammonia injection grid 150 may be stored in an ammonia store 152. In one embodiment, the ammonia is in a liquid (aqueous) form and pumped out of the ammonia store 152 by an ammonia pump 154 that is coupled thereto. The ammonia pump 154 is coupled to an ammonia vaporizer 158. The ammonia pump 154 pumps the aqueous ammonia into the ammonia vaporizer 158.

The ammonia vaporizer 158 is also coupled to the output of the low pressure super-heater 120. A portion of the steam exiting the low pressure super-heater 120 is diverted into the ammonia vaporizer 158. The remaining steam, as discussed above, travels to the supplemental low pressure super-heater 136.

The steam diverted to ammonia vaporizer 158 mixes with the ammonia in the ammonia vaporizer 158 and vaporizes and dilutes the aqueous ammonia during both the startup and normal operation. The mixture of the low pressure steam and vaporized ammonia is injected using the existing ammonia injection grid 150.

The system according to this embodiment may achieve one or more of the following advantages: elimination of the external skid of a conventional ammonia injection skid, efficient NOₓ control during fast start-up operations without over-design of the system, enhanced mixing of ammonia steam with the flue gas, ensuring minimum slip in ammonia and NOₓ, and enhanced reliability and control in the ammonia injection system. Any possible power loss to the loss of the low pressure steam may be compensated by the energy saving achieved by the elimination of the external skid which may include, for example, two recirculation fans, an atomizing skid and static mixers.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. An electrical power generation system, the system comprising:
   a combined cycle including a low pressure super-heater having a steam outlet;
   a peaker cycle including:
      an output duct that includes an ammonia injection grid;
      an ammonia injection system including:
         an ammonia vaporizer coupled to the steam outlet and the ammonia injection grid to inject supply NH₃ vapor to the output duct.
2. The system of clause 1, wherein the ammonia injection system further includes:
   an ammonia pump having a pump input and a pump output, the pump output being coupled to the ammonia vaporizing; and
   an ammonia store for storing aqueous ammonia coupled to the pump input.
3. The system of any preceding clause, wherein aqueous ammonia and steam are mixed together in the ammonia vaporizer to create an ammonia vapor and the ammonia vapor is provided to the ammonia injection grid.
4. The system of any preceding clause, wherein the output duct includes selective catalytic reduction catalysts.
5. The system of any preceding clause, wherein the selective catalytic reduction catalysts are normal temperature selective catalytic reduction catalysts.
6. An ammonia injection system comprising:
   an aqueous ammonia store adapted to store aqueous ammonia;
   an ammonia pump having in input coupled to the aqueous ammonia store and a pump output;
   an ammonia vaporizer coupled to the pump output and having a vaporizer input configured for connection an output of low pressure super-heater, the vaporizer including a grid output adapted for connection to an ammonia injection grid.
7. The system of any preceding clause, further comprising:
   an ammonia injection grid.
8. The system of any preceding clause, wherein the ammonia store includes aqueous ammonia disposed therein.
9. An electrical power generation system, the system comprising:
   a combined cycle, the combined cycle including:
      a gas turbine;
      a heat recovery steam generator coupled to the gas turbine and including a low pressure super-heater having a low pressure super-heater output;
      a peaker cycle, the peaker cycle including:
         a peaker gas turbine;
         an output duct coupled to the peaker gas turbine and including an ammonia injection grid;
         a supplemental low pressure super-heater within the output duct and thermally coupled to the low pressure super-heater output;
         an ammonia injection system including:
            an ammonia vaporizer coupled to the low pressure super-heater output and the ammonia injection grid to inject supply NH₃ vapor to the output duct.
10. The system of any preceding clause, wherein the ammonia injection system further includes:
   an ammonia pump having a pump input and a pump output, the pump output being coupled to the ammonia vaporizing; and
   an ammonia store for storing aqueous ammonia coupled to the pump input.
11. The system of any preceding clause, wherein aqueous ammonia and steam are mixed together in the ammonia vaporizer to create an ammonia vapor and the ammonia vapor is provided to the ammonia injection grid.
12. The system of any preceding clause, wherein the output duct includes selective catalytic reduction catalysts.
13. The system of any preceding clause, wherein the selective catalytic reduction catalysts are normal temperature selective catalytic reduction catalysts.

## Claims

1. An electrical power generation system (100), the system comprising:
a combined cycle (102) including a low pressure super-heater (120) having a steam outlet;
a peaker cycle (104) including:
an output duct (142) that includes an ammonia injection grid (150);
an ammonia injection system including:
an ammonia vaporizer (150) coupled to the steam outlet and the ammonia injection grid (150) to inject supply NH₃ vapor to the output duct.

2. The system of claim 1, wherein the ammonia injection system further includes:
an ammonia pump (154) having a pump input and a pump output, the pump output being coupled to the ammonia vaporizer (158); and
an ammonia store (152) for storing aqueous ammonia coupled to the pump input.

3. The system of claim 2, wherein aqueous ammonia and steam are mixed together in the ammonia vaporizer (158) to create an ammonia vapor and the ammonia vapor is provided to the ammonia injection grid (150).

4. The system of any preceding claim, wherein the output duct (142) includes selective catalytic reduction catalysts.

5. The system of claim 4, wherein the selective catalytic reduction catalysts are normal temperature selective catalytic reduction catalysts.

6. An ammonia injection system comprising:
an aqueous ammonia store (152) adapted to store aqueous ammonia;
an ammonia pump (154) having in input coupled to the aqueous ammonia store and a pump output;
an ammonia vaporizer (158) coupled to the pump output and having a vaporizer input configured for connection an output of a low pressure super-heater, the vaporizer including a grid output adapted for connection to an ammonia injection grid.

7. The system of claim 6, further comprising:
an ammonia injection grid (150).

8. The system of claim 6 or claim 7, wherein the ammonia store (152) includes aqueous ammonia disposed therein.
